# EUROPÄISCHE PATENTSCHRIFT

(11) **EP 0 509 263 B1**
(45) Veröffentlichungstag und Bekanntmachung des Hinweises auf die Patenterteilung: **04.10.1995**
(21) Anmeldenummer: 92104812.0
(22) Anmeldetag: 19.03.1992
(51) Int. Cl.: E05F 15/16, F16H 55/22, H02K 7/116, H02K 5/124, H02K 7/08, F16C 33/74, F16H 1/16

(54) **Kraftfahrzeug-Getriebemotorantrieb**
Geared motor device for automotive vehicles
Entraînement par moto-réducteur pour véhicules automobiles

(30) Priorität: 18.04.1991 EP 91106240; 10.03.1992 EP 92104094; 10.03.1992 DE 9203194 U
(43) Veröffentlichungstag der Anmeldung: 21.10.1992
(73) Patentinhaber: SIEMENS AKTIENGESELLSCHAFT, 80333 München (DE)
(72) Erfinder: Michel, Peter, Dipl.-Ing. (FH), W-8702 Kleinrinderfeld (DE); Kümmel, Alfred, Dipl.-Ing., W-8710 Kitzingen (DE)

(56) Entgegenhaltungen:
- EP-A- 0 420 212
- DE-A- 2 705 633
- DE-A- 3 414 842
- DE-A- 3 434 093
- DE-U- 8 520 901
- FR-A- 2 196 540
- GB-A- 2 176 943
- US-A- 3 535 948

## Beschreibung

Die Erfindung bezieht sich auf einen Kraftfahrzeug-Getriebemotorantrieb gemäß Oberbegriff des Anspruchs 1; ein Fensterheberantrieb dieser Art ist durch die DE-U-89 03 714 bekannt.

Im bekannten vorgenannten Fall ragt die Rotorwelle als fliegende Antriebs-Schneckenwelle in das Getriebegehäuse und kämmt dort mit einem Getrieberad eines Seilzug-Fensterhebers. Die Rotorwelle ist im Übergangsbereich zwischen dem Motorgehäuse und dem Getriebegehäuse in einer Kalotten-Lagerung in einem zur Befestigung am Motorgehäuse dienenden Flansch des Getriebegehäuses und durch ein weiteres Kalottenlager am getriebegehäuseabgewandten Ende des Elektromotors im Motorgehäuse gelagert. Zum Schutz gegen ansonsten in das Motorgehäuse eindringende Feuchtigkeit ist jeweils eine Dichtung zwischen dem Getriebegehäuse und dem dieses verschließenden Getriebegehäusedeckel sowie den eingeführten Seilzügen und ihren getriebegehäuseseitigen Seilführungen als auch zwischen den bei der gegenseitigen Montage von Motorgehäuse und Getriebegehäuse voreinander zur Anlage kommenden Stirnseiten dieser Bauteile derart vorgesehen, daß die komplette Einheit des Fensterheberantriebes wasserdicht ausgeführt ist. Zur Schmierung von Lager- und Getriebeteilen sind bei Fensterheberantrieben üblicherweise nichtflüssige Dauerschmierstoffe bei der Erstmontage den Lager- bzw. Getriebeteilen gesondert beigegeben.

Durch die FR-A-2 196 540 ist eine durch die Kalotte gegen eine Kalottenaufnahme angedrückte Kalottendichtung mit einer auf die zu lagernde Welle aufgedruckten Dichtlippe bekannt.

Durch die EP-A2-0 420 212 ist eine Großmaschinenanlage mit axial voreinanderliegendem Elektromotorgehäuse und öllgefülltem Getriebegehäuse mit einer in axialem Abstand zu einem die Motorwelle aufnehmenden Kugellager angeordneten einteiligen Doppellippendichtung bekannt, wobei in einem ersten Beispiel eine auf der Motorwelle aufliegende erste Dichtlippe als Staubchutz für das Kugellager und die andere zweite auf der Motorwelle aufliegende Dichtlippe als Schutz gegen ein Eindringen des Getriebeöls in das Motorgehäuse bzw. in einem zweiten Beispiel beide Dichtlippen zum Schutz gegen ein Eindringen des Getriebeöls in das Motorgehäuse dienen sollen; eine Schmiermitteldepotbildung zwischen zwei Dichtlippen bei ansonsten schmiermittelfreiem Gehäuseteilen ist nicht vorgesehen.

Durch die GB-A-2 176 943 ist ein durch einen Elektromotor angetriebenes Stirnradgetriebe bekannt, wobei das stirnseitige, zumindest teilweise offene Getriebegehäuse mit einem topfförmigen Bodenteil an einer Stirnseite des Motorgehäuses anliegt; die Rotorwelle des Elektromotors ragt als verlängerte Getriebewelle in das Getriebegehäuse. Angaben über eine Schmierung der rotierenden Teile fehlen.

Gemäß Aufgabe der Erfindung soll mit geringerem konstruktiven und montagetechnischen Aufwand einerseits ein Feuchtigkeitsschutz der elektrischen und lagerungstechnischen Bauteile gewahrleistet und andererseits der Aufwand zur Herstellung und zum Betrieb eines Getriebemotorantriebs, insbesondere eines Kraftfahrzeug-Fensterheberantriebes, erreicht werden.

Dies gelingt bei einer Motor-Getriebe-Einheit der eingangs genannten Art durch die Lehre des Anspruchs 1; vorteilhafte Ausgestaltungen der Erfindung sind jeweils Gegenstand der Unteransprüche.

Aufgrund lediglich der an sich bekannten Dichtung zwischen den Befestigungsflanschen von Motorgehäuseteil einerseits und Getriebegehäuseteil andererseits sowie der erfindungsgemäßen, auf einfach Weise zusätzlich anbringbaren und montierbaren Lagerdichtung ist somit eine Schmierung der rotierenden Lagerteile bei gleichzeitigem Schutz aller feuchtigkeitsempfindlichen Bauteile gewährleistet, derart daß eine Abdichtung des Getriebegehäuseteils nach außen gegen das Eindringen von Feuchtigkeit entfällt und wobei längerer wartungsfreier Betriebseinsatz durch die aus gehärtetem Stahl bestehende Schneckenwelle und das aus POM-Kunststoff mit einem vorzugsweise im Verhältnis 20% bis 50% beigemischten gleitmodifizierten POM-Kunststoff gebildete Schneckenrad unterstutzt ist. Dadurch kann nicht nur auf eine äußere Fettstoffbeigabe zu dem Getriebeantrieb zwischen Schneckenwelle und Schneckenrad verzichtet werden sondern gleichzeitig auch unter Berücksichtigung der üblichen Steigungswinkel ein selbsthemmender Reibwert zwischen Schneckenrad und Schneckenwelle erreicht werden.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert; darin zeigen:
- FIG 1: in einem axialen Teilschnitt-Längsbild den grundsätzlichen Aufbau eines Seil-Fensterheberantriebes,
- FIG 2: in einem vergrößerten Ausschnitt aus Figur 1 eine in der Kalottenlagerung aufgenommene Doppellippen-Dichtung.

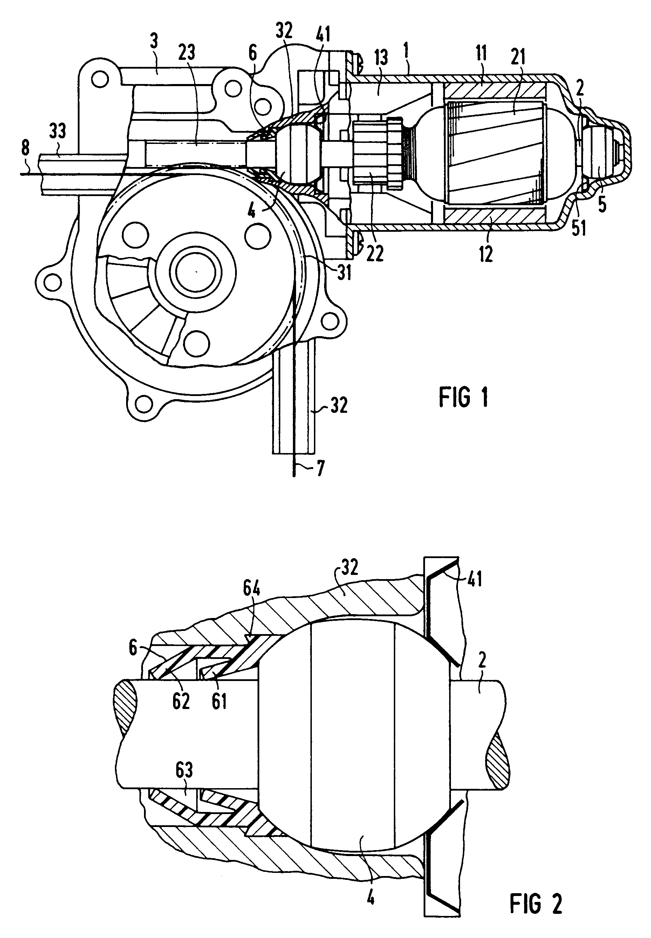

Figur 1 zeigt in einem axialen Teilschnitt-Längsbild den Prinzipaufbau eines elektromotorischen Kraftfahrzeug-Seilfensterantriebes mit einem Motorgehäuseteil 1 und einem daran unter Zwischenlage einer hier nicht sichtbaren Dichtung angeflanschten Getriebegehäuseteil 3. Im Innenraum des topfförmigen Motorgehäuseteils 1 sind an dessen Umfangsfläche teilschalenförmige Dauermagnetschalen 11 bzw.12 für die elektrische Erregung gehaltert; axial vor den Dauermagnetschalen 11;12 ist getriegehäuseteilseitig ein Bürstensystem 13 des hier vorgesehenen Kommutatormotors angeordnet. Die ein bewickeltes Rotorpaket 21 sowie einen Kommutator 22 aufnehmende Rotorwelle 2 ist in einem ersten Kalottenlager 4 in dem zur Befestigung des Motorgehäuseteils 1 an den Getriebegehäuseteil 3 angeformten Befestigungsflansch und in einem zweiten Kalottenlager 5 in dem getriegehäuseteilabgewandten Topfboden des Motorgehäuses 1 gelagert, ragt als fliegende Welle mit einer Schneckenwelle 23 in den Getriebegehäuseteil 3 und kämmt dort mit einem Getrieberad 31. Das Kalottenlager 4 ist durch eine Klemmbrille 41 in die kugelschalenförmige Kalottenlagerung 32 des Befestigungsflansches des Getriebegehäuseteils 3 und das Kalottenlager 5 ist durch eine Klemmbrille 51 in eine topfförmige Aufnahme des Topfbodens des Motorgehäuseteils 1 gedrückt.

Wie insbesondere aus der Detail-Ausschnittsvergrößerung gemäß Figur 2 ersichtlich, ist in der Kalottenhalterung 32 erfindungsgemäß eine Doppellippen-Dichtung 6 derart aufgenommen, daß sie durch den Andruck der Kalotte mit einer getriegehäuseteilseitigen Aufnahme 64 formschlüssig gehaltert und mit ihrer ersten Dichtlippe 71 bzw. ihrer zweiten Dichtlippe 62 einerseits durch einen axialen Druck der Kalotte 4, z.B. durch die Klemmbrille 41 bzw. einen Axialzug auf die Rotorwelle 2 bzw. durch einen Überdruck im Getriebegehäuseteil 3 bzw. Unterdruck im Motorgehäuseteil 1 dichtend auf die Oberfläche der Rotorwelle 2 aufgedrückt wird. Die Dichtlippen 61 bzw.62 sind derart in axialem Abstand angeordnet und als Teile der Wellendichtung 6 geformt, daß zwischen ihren ein Schmierstoff-Depot 63 entsteht, das ein Schmiermittel zur Dauerschmierung der Wellenlagerung bzw. der Dichtlippen 61 bzw.62 aufnehmen kann.

Durch die erfindungsgemäße Wellendichtung können sowohl die elektrischen Bauteile im Motorgehäuseteil als auch sämtliche Lager der Rotorwelle feuchtigkeitsdicht nach außen abgeschlossen werden, so daß auf eine komplette Abdichtung der gesamten Motor-Getriebe-Einheit mit mehreren, an verschiedenen Stellen am Getriebegehäuseteil anzubringenden Dichtungen verteilhafterweise verzichtet werden kann; dementsprechend ist z.B. gemäß FIG 1 auf eine Abdichtung des eingehenden bzw. abgehenden Seilzuges 7 bzw.8 relativ zu ihrer jeweiligen Seilfuhrung 32 bzw.33 am Getriebehäuseteil 3 verzichtet.

Um trotz des Verzichtes auf eine äußere Abdichtung des Getriebegehäuseteils 3 einen zu hohen Getriebeverschleiß vermeiden zu können, ist unter Verzicht auf eine äußere Beigabe von, u.U. durch eindringende Feuchtigkeit auswaschbarem Schmierfett bei einer üblicherweise aus Stahl bestehenden Rotorwelle 2 ein Schneckenrad 31 aus POM-Kunststoff mit einer Beigabe von gleitmodifiziertem POM-Kunststoff vorgesehen; bei einem Beimischungsverhältnis von 20%-50% kann je nach dem jeweiligen Steigungsverhältnis der Schneckenwelle 23 ein Reibwert von dem Schneckenrad 31 gegenüber der, üblicherweise aus gehärtetem Stahl gefertigten, Schneckenwelle 23 erreicht werden, der auch bei langen Betriebsstandzeiten eine sichere Selbsthemmung im Sinne einer unerwünschten Öffnungsbewegung, z.B. des Fensters eines Kraftfahrzeuges, mit einer Bewegung des Schneckenrades 31 entgegen seiner motorseitigen Antriebsrichtung gewährleistet. Zu POM-Kunststoffen zählen üblicherweise Polyoximethylen bzw. Polyacetal.

## Patentansprüche

1. Kraftfahrzeug-Getriebemotorantrieb, insbesondere Fensterheberantrieb, mit gegeneinander feuchtigkeitsdicht zusammengebautem Motorgehäuseteil (1) einerseits und Getriebegehäuseteil (3) eines Schneckengetriebes andererseits sowie mit einer Kalotten-Lagerung einer als Schneckenwelle (23) in den Getriebegehäuseteil (3) ragenden Rotorwelle (2) des Elektromotors im Verbindungsbereich zwischen dem Motorgehäuseteil (1) und dem Getriebegehäuseteil (3),
**gekennzeichnet durch**
eine getriebegehäuseteilseitig vor der Kalotte (4) in ihrer Kalottenaufnahme (32) mitgehalterte und durch die Kalotte (4) dichtend gegen die Kalottenaufnahme (32) bzw. die Rotorwelle (2) angedrückte einstückige Doppellippen-Dichtung (6) mit zumindest zwei axial in Abstand hintereinander dichtend auf der Rotorwelle (2) aufliegenden Dichtlippen (61 bzw.62) und einem zwischenliegenden Schmierstoff-Depot (63);
einen nach außen feuchtigkeitsdichtungslosen Getriebegehäuseteil (3);
eine Schneckenwelle aus Stahl und ein mit dieser kämmendes Schneckenrad (31) aus einem POM-Kunststoff mit einem beigemischten gleitmodifizierten POM-Kunststoff.

2. Kraftfahrzeug-Getriebemotorantrieb nach Anspruch 1, **gekennzeichnet durch** eine Beimischung des gleitmodifizierten POM-Kunststoffes im Sinne eines selbsthemmenden Reibwertes zwischen dem Schneckenrad (31) und der Schneckenwelle (23).

3. Kraftfahrzeug-Getriebemotorantrieb nach Anspruch 2 **gekennzeichnet durch** eine Beimischung des gleitmodifizierten POM-Kunststoffes mit einem Anteil von ca. 20%-30% in Abhängigkeit von der Steigungsauslegung der Schneckenwelle (23) bzw. dem jeweils vorgesehenen selbsthemmenden Reibwert.

4. Kraftfahrzeug-Getriebemotorantrieb nach Anspruch 3 **gekennzeichnet durch** ein Schneckenrad (31) aus Delrin 100 oder Delrin 500 mit einer Beimischung von gleitmodifiziertem Delrin 100 CL oder Delrin 500 CL.

## Claims

1. Motor-vehicle geared-motor drive, especially window-lifter drive, with, on the one hand, a motor-housing part (1) and, on the other hand, a gear-housing part (3) of a worm gear which are assembled so as to be moisture-tight relative to one another, and with a ball mounting of a rotor shaft (2) of the electric motor, the said rotor shaft projecting as a worm shaft (23) into the gear-housing part (3), in the region of connection between the motor-housing part (1) and the gear-housing part (3), characterized by a one-piece double-lip gasket (6) co-retained in the ball receptacle (32) of the ball (4) in front of the latter on the same side as the gear-housing part and pressed sealingly by the ball (4) against the ball receptacle (32) and the rotor shaft (2) respectively, with at least two sealing lips (61 and 62) resting sealingly at a distance one behind the other on the rotor shaft (2) and with an intermediate lubricant deposit (63); a gear-housing part (3) without moisture tightness relative to the outside; a worm shaft made of steel and a worm wheel (31) meshing with the latter and made of a POM plastic with an admixed slide-modified POM plastic.

2. Motor-vehicle geared-motor drive according to Claim 1, characterized by an admixture of the slide-modified POM plastic with the effect of a self-locking coefficient of friction between the worm wheel (31) and the worm shaft (23).

3. Motor-vehicle geared-motor drive according to claim 2, characterized by an admixture of the slide-modified POM plastic in a proportion of approximately 20%-30% in dependence on the pitch rating of the worm shaft (23) or on the particular self-locking coefficient of friction provided.

4. Motor-vehicle geared-motor drive according to Claim 3, characterized by a worm wheel (31) made of Delrin 100 or Delrin 500 with an admixture of slide-modified Delrin 100 CL or Delrin 500 CL.

## Revendications

1. Dispositif d'entraînement à moto-réducteur pour véhicules automobiles, notamment dispositif d'entraînement de lève-glace, comportant une partie de carcasse de moteur (1), d'une part, et une partie de carter (3) d'une transmission à vis sans fin, d'autre part, qui sont assemblées avec une étanchéité réciproque vis-à-vis de l'humidité, et un palier à calottes d'un arbre (2), qui pénètre en tant qu'arbre de vis sans fin (23) dans la partie de carter de transmission (3), du rotor du moteur électrique dans la zone de liaison entre la partie de carcasse du moteur (1) et la partie de carter de transmission (3),
caractérisé par
une garniture d'étanchéité monobloc à deux lèvres (6), qui est retenue, sur la partie de carter de transmission, en amont de la calotte (4), dans le logement (32) de cette dernière et est repoussée par la calotte (4) de façon étanche contre le logement (32) de la calotte ou contre l'arbre (2) du rotor et qui comporte au moins deux lèvres d'étanchéité (61 ou 62), qui sont situées l'une derrière l'autre en étant distantes axialement et s'appliquent de façon étanche sur l'arbre (2) du rotor, avec un espace intercalaire (63) pour le lubrifiant;
une partie de carter de transmission (3) qui ne comporte aucun système d'étanchéité vis-à-vis de l'humidité extérieure;
un arbre de vis sans fin en acier et une roue à vis sans fin engrenant avec cet arbre et réalisée en une matière plastique POM, dans laquelle est mélangée une matière plastique POM à caractéristiques de glissement modifiées.

2. Dispositif d'entraînement à servomoteur pour véhicules automobiles suivant la revendication 1, caractérisé en ce qu'une matière plastique POM à caractéristiques de glissement modifiées est ajoutée en mélange pour l'obtention d'un coefficient de frottement, réalisant un autoblocage, entre la roue à vis sans fin (34) et l'arbre (23) de la vis sans fin.

3. Dispositif d'entraînement à moto-réducteur pour véhicules automobiles suivant la revendication 2, caractérisé en ce qu'une matière plastique POM à caractéristiques de glissement modifiées est ajoutée en mélange et en un pourcentage d'environ 20 % - 30 %, en fonction du choix du pas de l'arbre (23) de la vis sans fin ou du coefficient de frottement respectivement prévu, réalisant un autoblocage.

4. Dispositif d'entraînement à moto-réducteur pour véhicules automobiles suivant la revendication 3, caractérisé par une roue à vis sans fin (31) en Delrin 100 ou en Delrin 500, dans lequel est mélangé du Delrin 100 CL ou du Delrin 500 CL, possédant des caractéristiques de glissement modifiées.
